# FASCICULE DE BREVET EUROPEEN

(11) **EP 3 581 529 B1**
(45) Date de publication et mention de la délivrance du brevet: **30.12.2020**
(21) Numéro de dépôt: 19179224.1
(22) Date de dépôt: 10.06.2019
(51) Int. Cl.: B65G 47/51, A21B 1/42

(54) **DISPOSITIF DE TRANSPORT DE TYPE NORIA DE PLAQUES SUPPORTS DE PRODUITS DE BOULANGERIE OU SIMILAIRES**
TRANSPORTVORRICHTUNG VOM NORIA-TYP FÜR AUFNAHMEPLATTEN VON BÄCKEREIPRODUKTEN ODER ÄHNLICHEM
DEVICE FOR NORIA TYPE TRANSPORT OF PLATES HOLDING BAKERY PRODUCTS OR SIMILAR

(30) Priorité: 14.06.2018 FR 1870699
(43) Date de publication de la demande: 18.12.2019
(73) Titulaire: MECATHERM, 67130 Barembach (FR)
(72) Inventeur: PINEAU, Damien, 49340 TREMENTINES (FR); SERGENT, Olivier, 75007 PARIS (FR)
(74) Mandataire: Cabinet Bleger-Rhein-Poupon

(56) Documents cités:
- EP-A1- 1 586 520
- EP-A1- 2 392 526
- CH-B1- 698 202
- DE-B- 1 133 683

## Description

La présente invention concerne le domaine du transport et du convoyage de produits, en particulier de produits de boulangerie, viennoiserie, pâtisserie et analogue.

Un tel dispositif trouvera une application particulière, mais aucunement limitative, dans le transport de produits sous forme de pâtons au travers de différentes lignes de production industrielle, en vue du traitement desdits pâtons, en particulier pour leur cuisson et/ou leur surgélation et/ou leur refroidissement et/ou leur fermentation.

Plus particulièrement, l'invention concerne un dispositif de transport de type noria pour plaques supports de produits de boulangerie ou similaires comprenant des moyens supports desdits plaques, coopérant, de part et d'autre d'un plan médian vertical avec un moyen d'entrainement. Chaque moyen d'entrainement comprend au moins une chaîne, courroie ou similaire décrivant un circuit bouclé de manière à définir une colonne ascendante de moyens supports et une colonne descendante de moyens supports.

On connait déjà, dans l'état de la technique, les documents de brevets EP 0 710 441 et WO 2015/001254 qui décrivent, dans des fours de cuisson de produits de boulangerie ou similaire, de tels dispositifs de convoyage de supports de cuisson de type noria.

Ces documents décrivent, plus particulièrement, un four qui, de manière connue, comporte une enceinte de cuisson munie d'une ouverture d'entrée et d'une ouverture de sortie, ladite enceinte étant traversée par un dispositif de transport permettant de véhiculer des supports de cuisson de type plaques, et sur lesquels reposent des pâtons à cuire.

Les dispositifs décrits dans ces documents comportent des systèmes de transport des plaques supports sous forme de noria assurant une circulation ascendante et descendante desdites plaques supports au sein de ladite enceinte de cuisson. Une telle noria est composée d'un couple de chaînes d'entraînement à maillons, disposées de part et d'autre d'un axe de traversée des supports de cuisson dans le four, chacune desdites chaînes venant s'enrouler au moins autour de deux roues de renvoi, pour décrire un circuit bouclé.

Ce circuit bouclé décrit par le couple de chaînes comporte alors un premier brin de chaîne ascendant et un second brin de chaîne descendant, tous les deux verticaux.

En outre, la noria est pourvue d'une pluralité de paires de bras supports, rendus solidaires en fixation des chaînes d'entrainement, et s'étendant perpendiculairement à celles-ci.

Plus particulièrement, sur chacune des chaînes de la noria sont fixés, avec un espacement régulier, lesdits bras supports. En outre, à un bras support d'une chaîne correspond un bras support de la seconde chaîne, de sorte que, sur deux bras supports se situant à un même niveau, peut reposer, horizontalement, une plaque support de produits de boulangerie.

Ainsi, une colonne ascendante de supports est définie par l'ensemble des plaques supports reposant sur les bras supports se situant d'un côté de la noria auquel il est communiqué un mouvement ascendant par l'intermédiaire des chaînes, tandis que la colonne descendante est définie par l'ensemble des plaques supports reposant sur les bras supports disposés de l'autre côté de la noria.

Dans ce système de transport de plaques supports, avant que la paire de bras entame sa rotation pour redescendre, une plaque, supportée jusqu'alors par une paire de bras se situant sur la colonne ascendante, est repoussée, par l'intermédiaire de moyens de transfert appropriés, vers une paire de bras située du côté de la colonne descendante de cette noria.

Au niveau de l'extrémité inférieure, les plaques supports circulent sur un convoyeur horizontal adapté, et sont prélevées, en amont, par la colonne ascendante et déposées, en aval, par la colonne descendante.

La conception du dispositif de transport de plaques supports, décrit dans le document EP 0 710 441, sur lequel sont fixés perpendiculairement des bras supports, entraine de nombreuses contraintes mécaniques, notamment en raison du poids appliqué sur lesdits bras, par les plaques chargées de produits, ledit poids étant déporté extérieurement par rapport à l'axe médian vertical passant par l'axe desdites roues de renvoi.

En effet, ce porte-à-faux tend à faire ployer les bras vers le bas au niveau des brins ascendants et descendants de la chaîne.

Plus précisément, ce poids déporté repousse chaque maillon intérieurement au niveau de son axe inférieur et extérieurement au niveau de son axe supérieur, déformant la linéarité verticale de la chaîne. Pour éviter cette déformation, il est nécessaire d'augmenter considérablement la tension appliquée par les roues de renvoi, et de la contrôler régulièrement.

La tension plus élevée nécessite un entraînement et une motorisation plus importante. En outre, cette tension provoque aussi une usure plus rapide des différentes pièces, notamment les maillons de la chaîne ou les roues de renvoi.

A noter également qu'il convient d'assurer constamment la lubrification des différentes pièces, augmentant les coûts d'entretien d'un tel dispositif.

En outre, il convient de prévoir, au niveau des moyens de transport, des moyens pour transférer les plaques supports ayant atteint l'extrémité supérieure de la noria, et donc de la colonne ascendante, du côté de la colonne descendante. En particulier, dans ce document, lorsqu'une plaque support atteint cette extrémité supérieure de la noria, celle-ci est arrêtée en sorte de permettre à un pousseur horizontal, composé d'un couple de chaînes actionnant en va-et-vient un chariot muni de poussoirs, de pousser ladite plaque support depuis les bras supports sur lesquels elle repose et correspondant à la colonne ascendante, sur des bras supports de la colonne descendante situés dans le même plan horizontal.

Il est également prévu, dans les dispositifs de transport de type noria de l'état de la technique, des moyens de guidage, souvent doublés, et sous forme de roue de centrage, pour conserver les bras supports selon une direction perpendiculaire et parfaitement alignés horizontalement au niveau des piles ascendantes et descendantes.

Si ces moyens de guidage empêchent la chaîne de vriller, ils génèrent des frottements augmentant l'usure des maillons et nécessitent d'augmenter la tension appliquée sur la chaîne.

Le document WO 2015/001254 cherche notamment à pallier certains de ces inconvénients, en proposant un dispositif de transport de type noria dans lequel la chaîne est rigidifiée au niveau de ses brins ascendants et descendants de sorte que le poids déporté des plaques supports reposant sur les bras ne s'applique plus directement sur chaque maillon de la chaîne, mais selon une unique composante verticale descendante.

Plus particulièrement, dans ce dispositif de l'état de la technique, à chaque maillon est assujettie, solidairement, une embase, les bras supports étant rapportés latéralement sur les maillons au moyen de cette embase. Les embases sont conçues pour s'empiler les unes sur les autres, formant alors une tige verticale.

Ce dispositif, bien qu'intéressant et remédiant à certains problèmes constatés préalablement, ne permet pas de pallier tous les inconvénients des systèmes de transport de type noria mis en œuvre dans le convoyage, au travers de différentes unités, de produits de boulangerie ou similaires.

En effet, l'un des problèmes persistant des dispositifs connus de l'état de la technique réside dans ce transfert des plaques supports, en partie supérieure des dispositifs, depuis la colonne ascendante vers la colonne descendante de la noria, mettant en œuvre des moyens de transfert complexes et peu fiables dans le temps en raison, notamment, des températures parfois extrêmes auxquelles ces moyens de transfert sont soumis, en particulier lorsque les systèmes de transport sont destinés à être implantés dans un four ou un surgélateur.

En outre, il est à noter que, dans les dispositifs de l'état de la technique, et de manière classique, les enceintes de cuisson, de fermentation, de surgélation ou autres, sont délimitées par une enveloppe isolante. Celle-ci est généralement de section parallélépipédique, et fermée, en partie haute et en partie basse, par un plancher et un plafond présentant, chacun, une forme semi-cylindrique. En effet, en partie haute, les bras supports, une fois le transfert de la plaque supportant les produits d'un côté à l'autre de la noria, doivent décrire un mouvement semi-circulaire pour passer de la colonne ascendante à la colonne descendante.

De manière similaire, en partie basse, une fois la plaque support évacuée sur un convoyeur, les bras supports décrivent à nouveau un mouvement semi-circulaire pour passer, cette fois, de la colonne descendante vers la colonne ascendante.

La rotation à 180°, exécutée par les bras supports aux extrémités supérieure et inférieure de l'enceinte de cuisson ou autre, pour passer de la colonne ascendante, respectivement descendante, à la colonne descendante, respectivement ascendante, implique nécessairement de prévoir un volume d'enceinte disponible, uniquement pour autoriser cette rotation.

On comprend dès lors que ce volume est, nécessairement, chauffé, ou refroidi, dans le cas par exemple d'enceintes de cuisson ou de refroidissement de produits, tandis que ledit volume n'est pas utilisé de manière effective pour cette cuisson ou ce refroidissement. Ce volume perdu, uniquement dévolu à la rotation des bras supports, constitue par conséquent un inconvénient, aussi bien en terme d'énergie dépensée pour un maintien de l'ensemble de l'enceinte à une température adéquate, que de place à prévoir en hauteur dans les locaux d'exploitation destinés à accueillir le dispositif de transport.

Le document DE1133683B décrit un dispositif selon le préambule de la revendication 1.

C'est ainsi dans le cadre d'une démarche inventive, pour répondre, au moins en partie, aux problèmes découlant notamment du transfert de plaques supports en partie supérieure de la noria, que l'on a imaginé supprimer totalement ce transfert par poussée depuis une première paire de bras en haut de la colonne ascendante vers une seconde paire de bras du haut de la colonne descendante, chaque plaque support de produits de boulangerie étant, dans la présente invention, constamment maintenue, horizontalement ou de manière sensiblement horizontale, entre deux cornières supports déportées par rapport à la noria et guidées notamment en partie supérieure de ladite noria pour garantir cette horizontalité .

En somme, dans le cadre de la présente invention, depuis sa prise en charge jusqu'à son évacuation, au-delà du circuit effectué sur la noria, une plaque support de produits de boulangerie ne subit plus aucun transfert entre différents bras supports, remédiant ainsi à un certain nombre d'inconvénients des dispositifs connus jusqu'alors.

A cet effet, la présente invention concerne un dispositif de transport, de type noria, pour plaques supports de produits de boulangerie ou similaires, comprenant des moyens supports desdites plaques, coopérant, de part et d'autre d'un plan médian vertical, avec un moyen d'entrainement, chaque moyen d'entrainement comprenant au moins une chaîne, courroie ou similaire, et décrivant un circuit bouclé de manière à définir une colonne ascendante de moyens supports et une colonne descendante de moyens supports, ledit dispositif étant caractérisé par le fait que les moyens supports sont définis par au moins une paire de supports cornières sur lesquels peuvent reposer les bordures latérales d'une plaque support, chaque moyen d'entrainement comportant au moins un support de raccordement articulé autour d'un axe horizontal d'au moins une cornière, ledit dispositif comportant des moyens de maintien et de guidage desdites cornières dans un plan sensiblement horizontal au moins dans une portion de transfert de la colonne ascendante vers la colonne descendante le long du circuit parcouru par chaque moyen d'entrainement, ledit dispositif de transport comportant des moyens de fonctionnement synchronisé desdits moyens d'entrainement et un convoyeur de chargement et déchargement s'étendant au moins sous la colonne ascendante et la colonne descendante entre lesdits moyens d'entrainement.

La présence d'un tel convoyeur de chargement et de déchargement entre les moyens d'entraînement, notamment des chaînes, permet de charger selon un flux continu, et de manière séquentielle, la colonne ascendante verticale, respectivement de décharger la colonne descendante verticale, sans qu'aucune opération supplémentaire, notamment de manipulation manuelle ou autre, ne soit effectuée sur les plaques supports des produits de boulangerie.

De manière avantageuse, la chaîne ou courroie d'un moyen d'entrainement décrit un circuit bouclé en venant s'enrouler partiellement au moins autour de deux roues de renvoi à axe horizontal en définissant un brin de chaîne ou courroie ascendant et un brin de chaîne ou courroie descendant, sur cette chaîne ou courroie, extérieurement au circuit bouclé décrit est rapportée, de manière articulée, à pas régulier, une structure déployable et repliable en accordéon, composée d'une succession de bras articulés entre eux et dont une première extrémité est montée articulée sur la chaîne ou courroie et dont l'autre extrémité porte les supports de raccordement articulés desdites cornières.

Dans un exemple de réalisation avantageux, le support de raccordement articulé est défini essentiellement sous forme d'un axe d'articulation portant une cornière.

Dans un autre exemple encore plus avantageux, le support de raccordement articulé comporte un axe d'articulation sur lequel est monté un rack de plusieurs cornières superposées, préférentiellement à équidistance.

Selon une autre particularité de l'invention, ledit dispositif comporte, en extrémité supérieure de chaque moyen d'entrainement, des moyens d'assistance de transfert de moyens supports arrivant en extrémité supérieure d'une colonne ascendante au-dessus d'une colonne descendante, lesdits moyens d'assistance de transfert comportant un dispositif de came avec lequel est amené à coopérer un support de raccordement articulé pour soumettre ce dernier à une vitesse de déplacement successivement croissante et décroissante, au passage de l'extrémité supérieure d'une colonne ascendante vers l'extrémité supérieure d'une colonne descendante.

Tout préférentiellement, les moyens d'assistance au transfert constituent les moyens de maintien et de guidage des cornières en position horizontale et comportent au moins deux pistes de came coopérant chacune avec un galet distinct porté par le support de raccordement articulé d'une cornière.

Plus préférentiellement encore, un support de raccordement articulé comporte de part et d'autre du plan médian vertical passant par son axe d'articulation horizontal un galet coopérant avec une des pistes de came, chaque galet constituant par ailleurs, en coopération avec une glissière verticale adaptée, des moyens de guidage et de maintien des cornières en position horizontale le long des colonnes verticales ascendante et descendante.

L'invention concerne également une unité de traitement de produits de boulangerie ou similaires, ladite unité étant notamment du type four de cuisson ou fermenteur ou surgélateur ou tour de refroidissement, et comportant au moins un dispositif de transport selon l'invention tel que décrit ci-dessus.

D'autres caractéristiques et avantages de l'invention ressortiront de la description détaillée qui va suivre des modes de réalisation non limitatifs de l'invention, en référence aux figures annexées dans lesquelles :

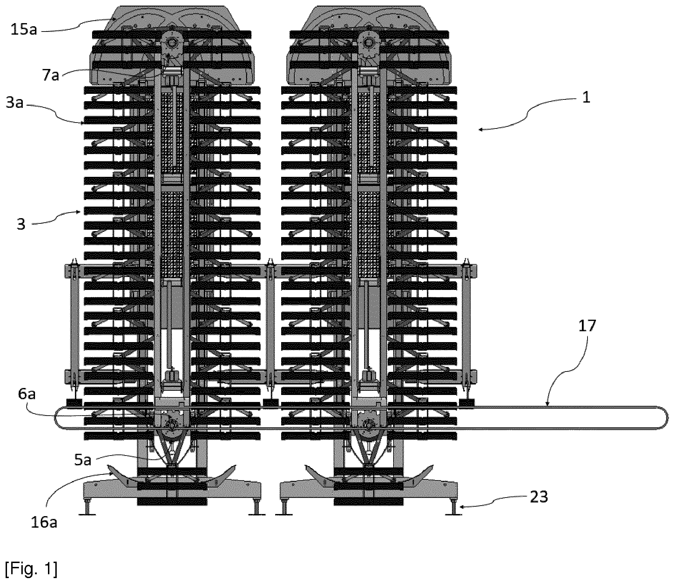

[Fig.1] représente schématiquement une vue de côté de deux dispositifs de transport de type noria selon l'invention, selon un mode de réalisation particulier et non limitatif, lesdits dispositifs étant disposés l'un après l'autre le long d'un convoyeur de chargement et de déchargement de plaques supports sur lesquelles reposent des produits de boulangerie ou analogues, les plaques et les produits n'étant toutefois pas représentés sur la figure ;

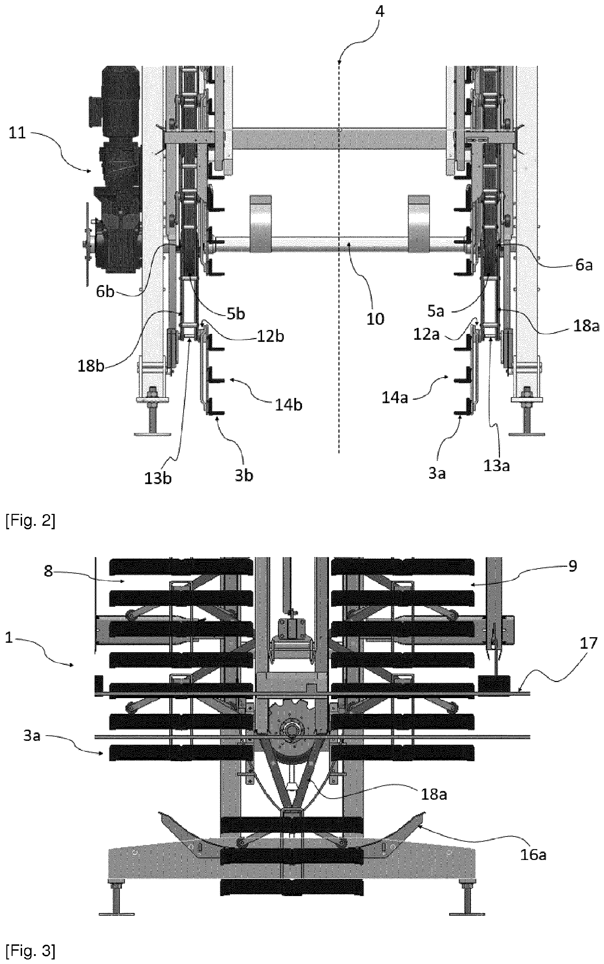

[Fig.2] représente schématiquement une vue de face d'un mode de réalisation particulier d'une partie du dispositif de transport de type noria de la figure 1, en l'occurrence la partie inférieure dudit dispositif ;
[Fig.3] représente schématiquement la partie du dispositif de transport de type noria de la figure 2 selon une vue en coupe le long d'un plan médian vertical dudit dispositif ;

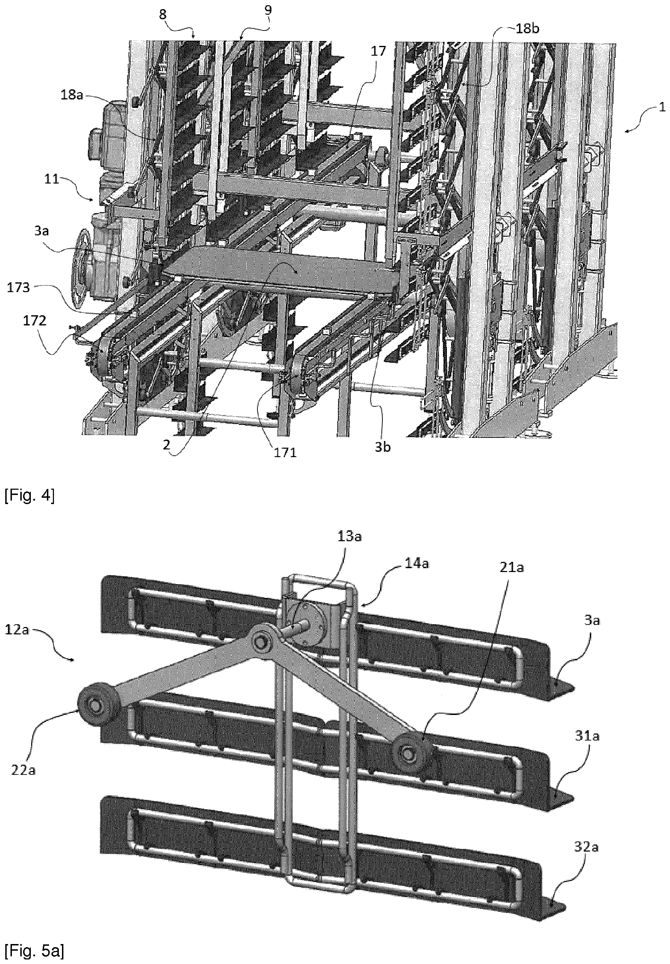

[Fig.4] représente schématiquement une vue en perspective d'un mode de réalisation particulier d'une autre partie du dispositif de transport de type noria de la figure 1, avec illustration de la prise en charge d'une plaque support en partie inférieure dudit dispositif ;
[Fig.5a] représente schématiquement une vue en perspective d'un mode de réalisation particulier d'une autre partie du dispositif de transport de type noria de la figure 1, en l'occurrence un support de raccordement articulé se présentant sous la forme d'un rack de trois cornières superposées et disposées sensiblement à équidistance, ledit rack étant monté sur un axe d'articulation ;

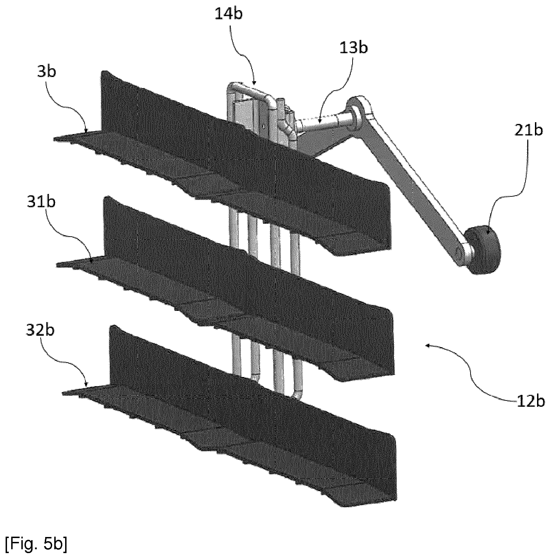

[Fig.5b] représente schématiquement une vue en perspective d'un support de raccordement constitué d'un rack de trois cornières superposées à équidistance et monté sur un axe d'articulation, ledit support étant destiné à venir en vis-à-vis du support de raccordement de la figure 5a sur le dispositif de transport de l'invention ;

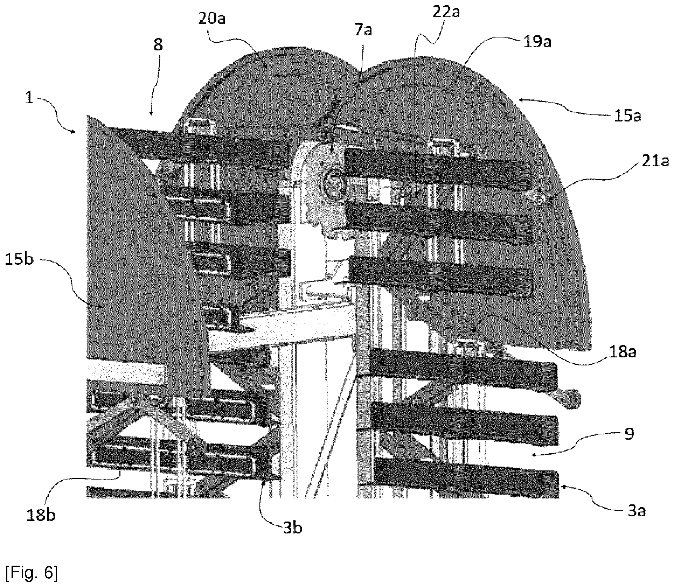

[Fig.6] représente schématiquement une vue en perspective d'un mode de réalisation particulier d'une partie du dispositif de transport de type noria de la figure 1, en l'occurrence les moyens d'assistance de transfert depuis une colonne ascendante vers une colonne descendante des moyens supports en partie supérieure dudit dispositif de transport ;

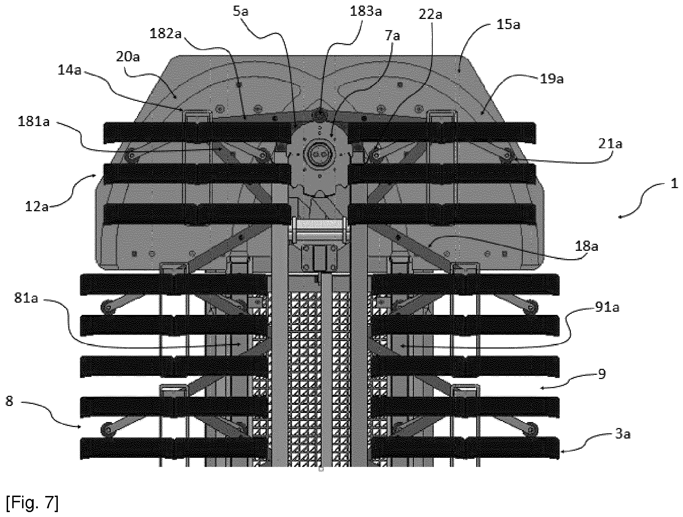

[Fig.7] représente schématiquement une vue de côté similaire à la figure 6, selon une coupe le long d'un plan médian vertical dudit dispositif.

En référence à ces dessins, la présente invention est relative à un dispositif de transport 1, de type noria, de plaques supports 2 ou analogues, tels que notamment des supports de pousse type peelboard, des moules en attelage ou bien encore des filets, ces plaques 2 étant généralement de forme rectangulaire ou sensiblement rectangulaire.

Dans la suite de la description, l'expression « plaque support », ou « plaques supports » selon le cas, sera utilisée pour désigner le moyen support sur lequel sont destinés à reposer des produits de boulangerie, viennoiserie, pâtisserie et similaires pour leur transport au travers d'au moins une unité de traitement d'une ligne de production industrielle.

A ce propos, le dispositif de transport 1 peut être avantageusement intégré dans une unité de traitement de tout type, et notamment dans un four de cuisson vertical, une étuve de fermentation, une tour de refroidissement, ou bien encore un surgélateur.

A noter également qu'il est tout à fait envisageable qu'une unité de traitement incorpore, si besoin, une pluralité de dispositifs de transport 1 selon l'invention décrits ci-après plus en détail.

Le présent dispositif de transport 1, de type noria, pour plaques supports 2 de produits de boulangerie comprend, de manière essentielle, des moyens supports 3 desdites plaques 2 pour la prise en charge et l'acheminement de ces dernières au sein du dispositif 1.

Selon une particularité de la présente invention, ces moyens supports 3 sont définis par au moins une paire de supports cornières 3a, 3b, prenant en charge une plaque support 2 par les bordures latérales de celle-ci, comme illustré plus particulièrement sur les figures 2 et 4 des dessins ci-joints, afin de maintenir horizontale ou sensiblement horizontale ladite plaque support 2 durant son transport au moyen du dispositif 1 de l'invention.

Bien évidemment, de préférence, le dispositif de transport 1 de type noria de l'invention, comporte une pluralité de telles paires de supports cornières 3a, 3b sur chacune desquelles peut venir reposer une plaque support 2 contenant des produits à transporter. Une paire de supports cornières 3a, 3b est plus particulièrement visible sur la figure 2 annexée.

Les moyens supports 3 des plaques 2, avantageusement les supports cornières 3a, 3b, coopèrent, de part et d'autre d'un plan médian 4 vertical, également visible sur la figure 2, avec un moyen d'entraînement.

Chaque moyen d'entraînement des supports cornières 3a, 3b, comprend, au moins, une chaîne 5a, 5b respectivement, courroie, ou similaire qui décrit préférentiellement un circuit bouclé en venant s'enrouler, au moins partiellement, autour d'au moins deux roues de renvoi.

Dans la suite de la description, on utilisera uniquement le terme « chaîne », concernant les moyens d'entrainement des supports cornières 3a, 3b, sachant que, par ce terme, il peut également être entendu que les moyens d'entraînement comportent une courroie ou similaire.

Ainsi, la chaîne 5a, entraîne le support cornière 3a coopérant avec un second support cornière 3b pour prendre en charge une plaque support 2, ledit second support cornière 3b étant lui-même entraîné par une chaîne 5b. Comme illustré sur la figure 1, cette chaîne 5a décrit un circuit bouclé en s'enroulant partiellement autour d'au moins deux roues de renvoi, de préférence une roue de renvoi inférieure 6a et une roue de renvoi supérieure 7a. En l'occurrence, il s'agit de roues à chaînes, et lesdites roues de renvoi 6a, 7a présentent un axe de rotation horizontal et sont situées dans un même plan vertical.

De la même manière, d'autre part du plan médian vertical 4, la chaîne 5b entraînant au moins le support cornière 3b décrit un circuit bouclé en venant s'enrouler partiellement autour, au moins, des roues de renvoi inférieure 6b et supérieure 7b, seule la roue de renvoi 6b positionnée en position inférieure du dispositif de transport 1 étant représentée sur la figure 2.

Ainsi, par un tel entrainement des plaques supports 2 au moyen de chaînes 5a, 5b décrivant chacune un circuit bouclé, sont définies une colonne ascendante 8 de moyens supports 3 et une colonne descendante 9 de moyens supports 3, chaque moyen support 3 étant constitué, dans l'invention, par une paire de supports cornières 3a, 3b.

En outre, au niveau de chaque chaîne 5a, 5b, décrivant un circuit bouclé, sont définis un premier brin de chaîne 5a, 5b ascendant et un second brin de chaîne 5a, 5b descendant.

Ces deux brins de chaîne 5a, 5b ou courroie correspondent aux portions de chaîne 5a, 5b situées entre les roues 6a, 7a et 6b, 7b respectivement et s'étendant verticalement.

A noter également que, selon une particularité de l'invention, le dispositif de transport 1, de type noria, comporte des moyens de fonctionnement synchronisé des moyens d'entraînement, en l'occurrence des chaînes 5a et 5b.

Tout préférentiellement, pour assurer le synchronisme de fonctionnement desdites chaînes 5a et 5b, au moins deux roues de renvoi situées dans un même plan horizontal, par exemple les roues de renvoi inférieures 6a, 6b, sont montées sur un seul et même arbre horizontal d'entraînement 10, représenté sur la figure 2, ledit arbre 10 coopérant par ailleurs avec des moyens moteurs d'entraînement 11 appropriés.

Un tel mode de réalisation ne doit toutefois pas être considéré comme étant limitatif de l'invention. En effet, il est tout à fait envisageable que l'arbre d'entraînement horizontal soit prévu en partie supérieure du dispositif de transport 1 de l'invention, pour entraîner, de manière synchronisée, les roues de renvoi supérieures 7a et 7b.

Ainsi, la colonne ascendante 8 de moyens supports 3 de plaques supports 2 est définie par l'ensemble desdits moyens supports 3, se situant d'un côté de la noria auquel il est communiqué un mouvement ascendant par l'intermédiaire des chaînes 5a, 5b, sous l'action par exemple de moyens moteurs d'entraînement 11 adaptés, tandis que la colonne descendante 9 est définie par l'ensemble des moyens supports 3 disposés de l'autre côté de la noria et auquel il est communiqué un mouvement descendant, étant entendu que, dans l'invention, les moyens supports 3 sont constitués chacun d'une paire de supports cornières 3a, 3b.

Selon une autre particularité de l'invention, chaque moyen d'entraînement, de préférence chaque chaîne 5a, 5b située de part et d'autre de l'axe médian vertical 4, comporte, au moins, un support de raccordement 12a, 12b articulé autour d'un axe horizontal 13a, 13b, d'au moins un support cornière 3a, 3b sur ladite chaîne 5a, 5b respectivement. De préférence, chaque chaîne 5a, 5b comporte une pluralité de tels supports de raccordement 12a, 12b, en sorte de pouvoir convoyer un grand nombre de plaques supports 2 de produits de boulangerie au moyen du dispositif de transport 1 de l'invention.

Un exemple de réalisation, non limitatif, d'un tel support de raccordement 12a, 12b est illustré sur les figures 5a et 5b des dessins ci-joints. La figure 5a représente un premier support de raccordement 12a destiné à être monté sur la chaîne 5a tandis que la figure 5b montre un second support de raccordement 12b, identique au support de raccordement 12a, et destiné à équiper la chaîne 5b en vis-à-vis dudit support de raccordement 12a.

Dans cet exemple, chacun des supports de raccordement articulés 12a, 12b comporte un axe d'articulation respectivement 13a, 13b sur lequel est monté un rack 14a, 14b de trois supports cornières 3a, 31a, 32a d'un côté et 3b, 31b, 32b de l'autre côté.

Avantageusement, lorsqu'un support de raccordement articulé 12a, 12b comprend un rack 14a, 14b de plusieurs cornières respectivement 3a, 31a, 32a et 3b, 31b, 32b, ces dernières sont positionnées à équidistance ou sensiblement à équidistance les unes des autres.

Dans un souci de simplification, dans la suite de la description, un support cornière est systématiquement désigné sous la référence 3a, même si les figures décrites représentent systématiquement un rack 14a ou 14b comportant une pluralité de tels supports cornières.

Il est d'ailleurs également envisagé qu'un support de raccordement articulé 12a, 12b comporte un rack 14a, 14b présentant un nombre de cornières différents, par exemple deux supports cornières, quatre supports cornières ou plus.

Dans un autre mode de réalisation tout aussi avantageux du dispositif de transport 1 de type noria selon l'invention, non représenté sur les figures, un support de raccordement articulé 12a, 12b est défini essentiellement sous la forme d'un axe d'articulation 13a, 13b portant une cornière 3a, 3b unique.

Quoiqu'il en soit, un support de raccordement 12a monté sur la chaîne 5a est entrainé par celle-ci de façon synchrone avec un support de raccordement 12b monté sur la chaîne 5b en sorte que deux supports cornières 3a, 3b, situés de part et d'autre du plan médian vertical 4, restent dans un même plan horizontal tout le long du circuit bouclé qu'ils décrivent dans le dispositif de transport 1, c'est-à-dire sur la colonne ascendante 8 et sur la colonne descendante 9 des moyens supports 3.

Dans un mode de réalisation particulièrement avantageux, qui est celui illustré sur les figures des dessins ci joints, extérieurement au circuit bouclé décrit par chaque moyen d'entrainement, en l'occurrence chaque chaîne 5a, 5b, est rapportée, de manière articulée et à pas régulier, sur chacune de ces chaînes 5a, 5b, une structure déployable et repliable en accordéon 18a, 18b respectivement.

Chacune de ces structures en accordéon 18a, 18b est constituée d'une succession de bras articulés notamment entre eux.

A titre d'exemple, la figure 7 illustre notamment deux bras 181a, 182a de la structure en accordéon 18a articulés entre eux. Une première extrémité de chacun des bras 181a, 182a est montée articulée au niveau de la chaîne 5a au niveau d'un arbre d'articulation (référencé 183a pour l'extrémité du bras 182a) tandis que la seconde extrémité desdits bras 181a, 182a porte, au niveau de l'articulation entre lesdits deux bras 181a, 182a et au travers de leurs axes d'articulation 13a, les supports de raccordement 12a comportant, dans l'exemple illustré, un rack 14a de trois cornières 3a.

A noter encore, selon une particularité propre au dispositif de transport 1 de plaques supports 2 de l'invention, que celui-ci comporte encore des moyens de maintien et de guidage 15a, 15b des supports cornières 3a, 3b dans un plan horizontal ou sensiblement horizontal au moins dans une portion de transfert desdites cornières depuis la colonne ascendante 8 vers la colonne descendante 9, en partie supérieure dudit dispositif 1.

Plus préférentiellement encore, le dispositif 1 de l'invention comporte à la fois des moyens de maintien et de guidage des cornières 3a, 3b dans la portion de transfert depuis la colonne ascendante 8 vers la colonne descendante 9 et également des moyens 16a de maintien horizontal et de guidage de ces cornières 3a, 3b lors de leur transfert en partie inférieure dudit dispositif 1, depuis la colonne descendante 9 vers la colonne ascendante 8, ces moyens 16a pouvant être identiques ou similaires aux moyens de maintien et de guidage 15a, 15b positionnés en partie supérieure.

A noter également que, dans le cas où le dispositif comporte de tels moyens de maintien et de guidage 16a dans la portion de transfert inférieure, ceux-ci peuvent être simplifiés par rapport aux moyens de de maintien et de guidage 15a dans la portion de transfert depuis la colonne ascendante 8 vers la colonne descendante 9 en partie supérieure du dispositif 1, pour les raisons exposées ci-après.

En effet, de préférence, les plaques supports 2 des produits à transporter arrivent, en continu, par l'intermédiaire d'un convoyeur 17 de chargement et de déchargement du dispositif de transport 1 de l'invention, ledit convoyeur 17 s'étendant, au moins, sous la colonne ascendante 8 et sous la colonne descendante 9, entre les moyens d'entrainement constitués notamment par les chaînes 5a, 5b du dispositif de transport 1 de l'invention.

Ce convoyeur 17, représenté notamment sur la figure 4, comporte, préférentiellement, deux chaînes 171, 172 à défilement parallèle et sensiblement horizontal sur lesquelles sont disposées, successivement et régulièrement, les plaques support 2 recevant les produits de boulangerie. Chacune de ces chaînes 171, 172 est munie d'une pluralité de taquets 173 qui, lorsque lesdites chaînes 171, 172 sont mises en mouvement, viennent pousser une plaque support 2 au bas de la colonne ascendante 8 de moyens supports 3.

A ce niveau-là, les chaînes 171,172 du convoyeur s'arrêtent et ladite plaque support 2 est transférée directement, sans autre manipulation, depuis le convoyeur 17 vers la colonne ascendante 8 du dispositif 1, entre deux supports cornières 3a, 3b, chacun de ces derniers supportant une bordure latérale de ladite plaque support 2. Cette dernière est alors entrainée verticalement vers le haut, le long de ladite colonne ascendante 8, jusqu'à l'extrémité supérieure de celle-ci, où la plaque 2 va alors être transférée vers la colonne descendante 9 au niveau d'une portion de transfert où ladite plaque 2 est maintenue dans une position horizontale, toujours sur lesdites cornières 3a, 3b, ces dernières elles même étant maintenues horizontalement par l'intermédiaire des moyens de maintien et de guidage 15a, 15b.

L'on comprend bien ici que, dans la présente invention, contrairement à l'état de la technique, la plaque support 2 n'est plus repoussée depuis une colonne, en l'occurrence la colonne montante 8, vers la colonne descendante 9. La plaque support 2 est maintenue horizontalement, ou sensiblement horizontale, sur les mêmes supports cornières 3a, 3b, par lesquels elle a été prise en charge à l'origine au bas de la colonne ascendante 8, et cela sur l'intégralité du trajet qu'elle effectue dans le dispositif de transport 1 de type noria de l'invention. On évite ainsi les opérations de passage d'une première paire de bras supports vers une seconde paire de bras en partie supérieure de la colonne montante, avec les inconvénients que ces opérations impliquent nécessairement, notamment la présence de mécanismes de transfert complexes et susceptibles de se détériorer au cours du temps, ainsi que le volume perdu dans l'enceinte de cuisson ou autre pour permettre la rotation desdits bras.

Une fois le transfert de la plaque support 2 effectué en partie supérieure du dispositif 1, celle-ci est entraînée en descente de l'autre côté de la noria jusqu'à atteindre à nouveau le convoyeur de chargement et déchargement 17, qui s'étend à la fois sous la colonne ascendante 8 et sous la colonne descendante 9. A ce niveau-là, la plaque support 2 est déposée par la colonne descendante 9 directement sur ledit convoyeur 17, pour être ensuite, par exemple, évacuée du dispositif de transport 1.

Dans un exemple de réalisation envisagé du dispositif de transport 1 de l'invention, celui-ci comporte un seul et même convoyeur de chargement et de déchargement 17 qui achemine les plaques supports 2 sur une première colonne ascendante 8 et qui récupère ces mêmes plaques 2 depuis une première colonne descendante 9 avant de les convoyer vers une seconde colonne ascendante puis de les récupérer à partir d'une seconde colonne descendante. Dans ce cas, des premiers moyens d'entrainement de type chaîne décrivant un circuit bouclé définissent les premières colonnes ascendante et descendante et des seconds moyens d'entrainement similaires définissant les secondes colonnes ascendante et descendante. Un tel mode de réalisation est par exemple illustré sur la figure 1 jointe.

Quoiqu'il en soit, une fois la plaque support 2 déposée sur le convoyeur 17, les deux supports cornières 3a, 3b poursuivent alors leur circuit sous le convoyeur 17 jusqu'à une portion de transfert de la colonne descendante 9 vers la colonne ascendante 8, en partie inférieure de la noria.

Le convoyeur 17 de chargement et de déchargement présente de préférence un fonctionnement séquentiel notamment pour présenter successivement les plaques supports 2 au niveau de la colonne ascendante 8 de moyens supports 3 puis pour décharger successivement ces plaques 2 de la colonne descendante 9. Ce convoyeur 17 permet toutefois de présenter les plaques supports 2 sans interruption au bas de la colonne ascendante 8. Les chaînes 5a, 5b de la noria, quant à elles, peuvent être également à fonctionnement séquentiel pour attendre la mise en place, entre deux cornières supports 3a, 3b, d'une plaque support 2 au bas de la colonne ascendante 8 ou pour attendre le déchargement d'une telle plaque 2 depuis la colonne descendante 9 vers le convoyeur 17.

Cependant, les chaînes 5a, 5b des moyens d'entrainement du dispositif de transport 1 de type noria de l'invention peuvent également présenter un fonctionnement ininterrompu, avec un asservissement en vitesse de fonctionnement entre la noria et le convoyeur 17 de chargement et de déchargement.

Quoiqu'il en soit, on comprend que, au niveau de la portion de transfert inférieure, entre les colonnes descendante 9 et ascendante 8, les supports cornières 3a, 3b ne soutiennent plus de plaque support 2 contenant des produits, contrairement à la portion de transfert supérieure depuis la colonne ascendante 8 vers la colonne descendante 9. Par conséquent, les moyens de maintien et de guidage 16a desdits supports cornières 3a, 3b dans un plan horizontal peuvent être simplifiés en partie inférieure, où il n'y a pas de plaques 2, en comparaison avec les moyens de maintien et de guidage 15a, 15b où là les supports cornières 3a, 3b portent une telle plaque 2.

Le dispositif de transport 1 de type noria de l'invention comporte encore, en extrémité supérieure de chaque moyen d'entrainement des paires de supports cornières 3a, 3b, des moyens d'assistance de transfert de ces dernières lorsqu'elles atteignent l'extrémité supérieure de la colonne ascendante 8 au-dessus de la colonne descendante 9.

Préférentiellement, ces moyens d'assistance de transfert comportent un dispositif de came, lequel coopère avec un support de raccordement articulé 12a, 12b, afin de soumettre ledit support 12a, 12b à une vitesse de déplacement successivement croissante puis décroissante au passage de l'extrémité supérieure du dispositif 1, depuis le haut de la colonne ascendante 8 vers le haut de la colonne descendante 9.

Plus préférentiellement encore, et selon le mode de réalisation particulier représenté sur les figures des dessins ci-joints, les moyens d'assistance au transfert évoqués ci-dessus constituent également les moyens de maintien et de guidage 15a, 15b des cornières 3a, 3b en position horizontale.

Dans ce mode de réalisation, ces moyens d'assistance au transfert 15a, 15b, remplissant également une fonction de maintien et de guidage des supports de raccordement articulés 12a, 12b, comportent deux pistes de came.

Sur les figures 6 et 7 sont représentés les deux pistes de came 19a et 20a des moyens d'assistance au transfert 15a, étant entendu que, de l'autre côté du plan médian vertical 4 du dispositif 1 de l'invention, les moyens d'assistance au transfert 15b comportent également deux pistes de came identiques, celles-ci n'étant toutefois pas visibles sur lesdites figures.

Chacune de ces pistes de came 19a et 20a coopère avec un galet, respectivement 21a, 22a, pour le guidage et le maintien à l'horizontale des cornières 3a, 3b supportant les plaques 2 lors du transfert d'une colonne 8 à l'autre 9. En outre, la configuration de ces moyens 15a, 15b, sous la forme de pistes de came permet de conférer, à deux supports de raccordement articulés 12a, 12b en vis-à-vis portant au moins une plaque support 2 au travers d'au moins une paire de cornières 3a, 3b, et arrivant au niveau de la portion de transfert entre les colonnes ascendante 8 et descendante 9, une accélération par rapport aux supports de raccordement articulés suivants, et ce dans le sens de défilement des chaînes 5a, 5b. En effet, au moyen de ce double guidage, un point d'articulation entre deux bras 181a, 182a de la structure déployable et repliable en accordéon 18a est rapproché de la chaîne 5a, et il en découle un éloignement de deux supports de raccordements successifs 12a par l'accélération évoquée ci-dessus. Bien évidemment, étant donné que les deux chaînes 5a, 5b présentent un fonctionnement synchrone, une cinématique identique est observée simultanément pour les éléments, en particulier les bras articulés, de la structure 18b, ainsi que pour le support de raccordement 12b en vis-à-vis, respectivement de la structure articulée 18a et du support 12a. On évite ainsi tout heurt ou choc entre deux supports de raccordement articulés successifs lors du passage de cette portion de transfert.

Comme représentées sur les figures, lesdites pistes de came 19a et 20a sont avantageusement définies par des rainures de guidage que porte un flasque, ou une joue, en partie supérieure du dispositif de transport 1 de type noria selon la présente invention.

De manière encore plus avantageuse, l'entrée desdites rainures de guidage définissant les pistes de came 19a, 20a, se présente en biseau pour faciliter l'entrée des galets 21a, 22a dans lesdites rainures et garantir une horizontalité des plaques supports 2 tout le long du chemin emprunté dans le dispositif de transport 1.

Préférentiellement, et comme illustré plus particulièrement sur les figures 5a et 5b, ces galets 21a, 22a (un seul galet 22b étant visible sur la figure 5b), coopérant avec les pistes de came 19a, 20a, sont portés par un support de raccordement articulé 12a, 12b, de part et d'autre d'un plan médian vertical passant par l'axe d'articulation horizontal 13a, 13b respectivement.

Dans un mode de réalisation tout préférentiel, et illustré sur les figures annexées, chaque galet 21a, 22a est susceptible de coopérer, soit sur le premier brin de chaîne ascendant, soit sur le second brin de chaîne descendant, avec une glissière verticale adaptée en sorte de former des moyens de guidage des supports de raccordement articulés 12a et des moyens de maintien à l'horizontale du ou des supports cornières 3a portés par lesdits moyens de raccordement articulés 12a.

Ainsi, le dispositif de transport 1 de type noria selon l'invention comporte, avantageusement, d'une part, une première glissière verticale 81a coopérant avec le galet 21a le long de la colonne verticale ascendante 8 de moyens supports et, d'autre part, une seconde glissière verticale 91a coopérant avec le galet 22a le long de la colonne verticale descendante 9, en référence plus particulièrement à la figure 7.

Ainsi, au cours de la montée dans le dispositif 1, le galet 21a coopère préférentiellement avec la glissière 91a avant de coopérer, lors du transfert depuis la colonne ascendante 8 vers la colonne descendante 9, avec la piste de came 19a. Une fois sortie de cette piste de came 19a, le long de la colonne descendante 9, le galet 21a n'est plus en coopération avec une glissière verticale, le relai de guidage ayant été pris par le galet 22a qui est, quant à lui, guidé, à sa sortie de la piste de came 20a, par la glissière verticale 91a dans la descente alors qu'il n'était pas guidé le long de la colonne ascendante 8.

Bien évidemment, même si un seul côté du dispositif de transport 1 de l'invention est représenté en ce qui concerne les moyens de guidage et de maintien des cornières en position horizontale le long des colonnes ascendante 8 et descendante 9 du côté de la chaîne 5a, de tels moyens, sous la forme de glissières verticales similaires aux glissières 81a, 91a, sont également prévus du côté de la chaîne 5b.

Avantageusement, le dispositif de transport 1 de l'invention repose au sol par l'intermédiaire de pieds 23 ou d'une structure support quelconque permettant de ménager un espace libre en partie inférieure dudit dispositif 1 pour autoriser le passage des supports cornières 3a, 3b depuis la colonne descendante 9 vers la colonne ascendante 8.

## Revendications

1. Dispositif de transport (1), de type noria, pour plaques supports (2) de produits de boulangerie ou similaires, comprenant des moyens supports (3) desdites plaques (2), coopérant, de part et d'autre d'un plan médian vertical (4), avec un moyen d'entrainement, chaque moyen d'entrainement comprenant au moins une chaîne (5a,5b), courroie ou similaire, et décrivant un circuit bouclé de manière à définir une colonne ascendante (8) de moyens supports (3) et une colonne descendante (9) de moyens supports (3), les moyens supports (3) étant définis par au moins une paire de supports cornières (3a,3b) sur lesquels peuvent reposer les bordures latérales d'une plaque support (2), ledit dispositif de transport (1) comportant des moyens de fonctionnement synchronisé (10,11) desdits moyens d'entrainement et un convoyeur (17) de chargement et déchargement s'étendant au moins sous la colonne ascendante (8) et la colonne descendante (9) entre lesdits moyens d'entrainement (5a, 5b),
le dispositif étant **caractérisé en ce que**:
- chaque moyen d'entraînement (5a, 5b) comporte au moins un support de raccordement (12a, 12b) articulé autour d'un axe horizontal (13a, 13b) d'au moins une cornière (3a, 3b),
- ledit dispositif (1) comporte des moyens de maintien et de guidage (15a, 15b) desdites cornières (3a, 3b) dans un plan sensiblement horizontal au moins dans une portion de transfert de la colonne ascendante (8) vers la colonne descendante (9) le long du circuit parcouru par chaque moyen d'entraînement.

2. Dispositif de transport (1), de type noria, selon la revendication 1, **caractérisé par le fait que** la chaîne (5a,5b) ou courroie d'un moyen d'entrainement décrit un circuit bouclé en venant s'enrouler partiellement au moins autour de deux roues de renvoi (6a,7a ; 6b,7b) à axe horizontal en définissant un brin de chaîne ou courroie ascendant et un brin de chaîne ou courroie descendant, sur cette chaîne (5a,5b) ou courroie, extérieurement au circuit bouclé décrit est rapportée, de manière articulée, à pas régulier, une structure déployable et repliable en accordéon (18a,18b), composée d'une succession de bras (181a, 182a) articulés entre eux et dont une première extrémité est montée articulée sur la chaîne (5a,5b) ou courroie et dont l'autre extrémité porte les supports de raccordement articulés (12a,12b) desdites cornières (3a,3b).

3. Dispositif de transport (1), de type noria, selon l'une quelconque des revendications précédentes **caractérisé par le fait que** le support de raccordement articulé (12a,12b) est défini essentiellement sous forme d'un axe d'articulation (13a,13b) portant une cornière (3a,3b).

4. Dispositif de transport (1), de type noria, selon l'une quelconque des revendications 1 ou 2 **caractérisé par le fait que** le support de raccordement articulé (12a,12b) comporte un axe d'articulation (13a,13b) sur lequel est monté un rack (14a,14b) de plusieurs cornières (3a,31a,32a ; 3b, 31b, 32b) superposées, préférentiellement à équidistance.

5. Dispositif de transport (1), de type noria, selon l'une quelconque des revendications précédentes **caractérisé par le fait que** ledit dispositif (1) comporte en extrémité supérieure de chaque moyen d'entrainement (5a,5b), des moyens d'assistance de transfert de moyens supports (3) arrivant en extrémité supérieure d'une colonne ascendante (8) au-dessus d'une colonne descendante (9), lesdits moyens d'assistance de transfert comportant un dispositif de came avec lequel est amené à coopérer un support de raccordement articulé (12a, 12b) pour soumettre ce dernier à une vitesse de déplacement successivement croissante et décroissante, au passage de l'extrémité supérieure d'une colonne ascendante (8) vers l'extrémité supérieure d'une colonne descendante (9).

6. Dispositif de transport (1), de type noria, selon la revendication précédente **caractérisé par le fait que** les moyens d'assistance au transfert constituent les moyens de maintien et de guidage des cornières (15a) en position horizontale et comportent au moins deux pistes de came (19a, 20a) coopérant chacune avec un galet (21a,22a) distinct porté par le support de raccordement articulé (12a) d'une cornière (3a).

7. Dispositif de transport (1), de type noria, selon la revendication précédente, **caractérisé par le fait qu'**un support de raccordement articulé (12a) comporte de part et d'autre du plan médian vertical passant par son axe d'articulation horizontal (13a) un galet (21a,22a) coopérant avec une des pistes de came (19a,20a), chaque galet (21a,22a) constituant par ailleurs, en coopération avec une glissière verticale (81a,91a) adaptée, des moyens de guidage et de maintien des cornières (3a) en position horizontale le long des colonnes verticales ascendante (8) et descendante (9).

8. Unité de traitement de produits de boulangerie ou similaires, ladite unité étant notamment du type four de cuisson ou fermenteur ou surgélateur ou tour de refroidissement, **caractérisée en ce qu'**elle comporte au moins un dispositif de transport (1), de type noria, selon l'une quelconque des revendications précédentes.

## Patentansprüche

1. Transportvorrichtung (1), der Art Noria, für Auflageplatten (2) für Backwaren oder dergleichen, umfassend Stützmittel (3) für die besagten Platten (2), die beiderseits einer vertikalen Mittelebene (4) mit einem Antriebsmittel zusammenwirken, wobei jedes Antriebsmittel mindestens eine Kette (5a, 5b), einen Riemen oder dergleichen umfasst und eine Schleifenschaltung beschreibt, um eine aufsteigende Spalte (8) von Stützmitteln (3) und eine absteigende Spalte (9) von Stützmitteln (3) zu definieren, wobei die Stützmittel (3) durch mindestens ein Paar Winkelstützen (3a, 3b) definiert sind, auf denen sich die Seitenkanten einer Auflageplatte (2) abstützen können, wobei die besagte Transportvorrichtung (1) Mittel zum synchronisierten Betrieb (10, 11) der besagten Antriebsmittel und einen Lade- und Entladeförderer (17) umfasst, der sich mindestens unterhalb der aufsteigenden Spalte (8) und der absteigenden Spalte (9) zwischen den besagten Antriebsmitteln (5a, 5b) erstreckt, wobei die Vorrichtung **dadurch gekennzeichnet ist, dass**:
- jedes Antriebsmittel (5a, 5b) mindestens einen Anschlusssockel (12a, 12b) umfasst, der um eine horizontale Achse (13a, 13b) von mindestens einem Winkel (3a, 3b) gelenkig ist,
- die besagte Vorrichtung (1) Mittel zum Halten und Führen (15a, 15b) der besagten Winkel (3a, 3b) in einer im Wesentlichen horizontalen Ebene, zumindest in einem Übertragungsteil von der aufsteigenden Spalte (8) zu der absteigenden Spalte (9) entlang der Schaltung, die von jedem Antriebsmittel durchlaufen wird, umfasst.

2. Transportvorrichtung (1), der Art Noria, nach Anspruch 1, **dadurch gekennzeichnet, dass** die Kette (5a, 5b) oder der Riemen eines Antriebsmittels eine Schleifenschaltung dadurch beschreibt, dass sie/er sich teilweise um wenigstens zwei Umkehrräder (6a, 7a; 6b, 7b) mit horizontaler Achse wickelt, wobei sie/er einen aufsteigenden Ketten- oder Riementrum und einen absteigenden Ketten- oder Riementrum an dieser Kette (5a, 5b) oder an diesem Riemen definiert, wobei außerhalb der beschriebenen Schleifenschaltung in regelmäßigem Abstand gelenkig eine akkordeonartig entfaltbare und faltbare Struktur (18a, 18b) angebracht ist, die aus einer Reihe von Armen (181a, 182a) besteht, die zu einander gelenkig sind und von denen ein erstes Ende gelenkig an der Kette (5a, 5b) oder am Riemen montiert ist, und deren anderes Ende die gelenkigen Anschlusssockel (12a, 12b) der besagten Winkel (3a, 3b) trägt.

3. Transportvorrichtung (1), der Art Noria, nach irgendeinem der vorhergehenden Ansprüche, **dadurch gekennzeichnet, dass** der gelenkige Anschlusssockel (12a, 12b) im wesentlichen in der Form einer Gelenkachse (13a, 13b) definiert ist, die einen Winkel (3a, 3b) trägt.

4. Transportvorrichtung (1), der Art Noria, nach irgendeinem der Ansprüche 1 oder 2, **dadurch gekennzeichnet, dass** der gelenkige Anschlusssockel (12a, 12b) eine Gelenkachse (13a, 13b) umfasst, auf der ein Rack (14a, 14b) von mehreren vorzugsweise in gleichem Abstand übereinander angeordneten Winkeln (3a, 31a, 32a; 3b, 31b, 32b) montiert ist.

5. Transportvorrichtung (1), der Art Noria, nach irgendeinem der vorhergehenden Ansprüche, **dadurch gekennzeichnet, dass** die besagte Vorrichtung (1) am oberen Ende jedes Antriebsmittels (5a, 5b) Mittel zur Unterstützung der Übertragung von Stützmitteln (3), die am oberen Ende einer aufsteigenden Spalte (8) oberhalb einer absteigenden Spalte (9) ankommen, umfasst, wobei die besagten Mittel zur Unterstützung der Übertragung eine Nockenvorrichtung umfassen, mit der ein gelenkiger Anschlusssockel (12a, 12b) zusammenwirken soll, um diese einer aufeinanderfolgend zunehmenden und abnehmenden Bewegungsgeschwindigkeit bei dem Durchgang von dem oberen Ende einer aufsteigenden Spalte (8) zu dem oberen Ende einer absteigenden Spalte (9) auszusetzen.

6. Transportvorrichtung (1), der Art Noria, nach dem vorhergehenden Anspruch, **dadurch gekennzeichnet, dass** die Mittel zur Unterstützung der Übertragung die Mittel zum Halten und Führen der Winkel (15a) in einer horizontalen Position bilden und mindestens zwei Nockenbahnen (19a, 20a) umfassen, die jeweils mit einer unterschiedlichen Rolle (21a, 22a) zusammenwirken, die von dem gelenkigen Anschlusssockel (12a) eines Winkels (3a) getragen wird.

7. Transportvorrichtung (1), der Art Noria, nach dem vorhergehenden Anspruch, **dadurch gekennzeichnet, dass** ein gelenkiger Anschlusssockel (12a) beiderseits der vertikalen Mittelebene, die durch seine horizontale Gelenkachse verläuft (13a), eine Rolle (21a, 22a) umfasst, die mit einer der Nockenbahnen (19a, 20a) zusammenwirkt, wobei jede Rolle (21a, 22a) in Zusammenwirkung mit einer geeigneten vertikalen Gleitschiene (81a, 91a) außerdem Mittel zum Führen und Halten der Winkel (3a) in einer horizontalen Position entlang der vertikalen aufsteigenden (8) und absteigenden (9) Spalten bildet.

8. Einheit zur Verarbeitung von Backwaren oder ähnlichen Produkten, wobei die besagte Einheit nämlich der Art Backofen oder Gärbehälter oder Gefrierschrank oder Kühlturm ist, **dadurch gekennzeichnet, dass** sie mindestens eine Transportvorrichtung (1) der Art Noria nach irgendeinem der vorhergehenden Ansprüche umfasst.

## Claims

1. Noria-like transport device (1) for supporting plates (2) for bakery products or the like, comprising supporting means (3) for said plates (2), cooperating, on either side of a vertical median plane (4), with a driving means, each driving means comprising at least a chain (5a, 5b), a belt or the like, and describing a looped circuit so as to define an ascending column (8) of supporting means (3) and a descending column (9) of supporting means (3), the supporting means (3) being defined by at least one pair of angle brackets (3a, 3b) on which the lateral edges of a supporting plate (2) can rest, said transport device (1) including synchronized operating means (10, 11) for said driving means and a loading and unloading conveyor (17) extending at least under the ascending column (8) and the descending column (9) between said driving means (5a, 5b), the device being **characterized in that**:
- each driving means (5a, 5b) includes at least one connecting support (12a, 12b) articulated about a horizontal axis (13a, 13b) of at least one angle bracket(3a, 3b),
- said device (1) includes means for maintaining and guiding (15a, 15b) said angle brackets (3a, 3b) in a substantially horizontal plane at least in a transfer portion from the ascending column (8) to the descending column (9) along the circuit traveled by each driving means.

2. Noria-like transport device (1) according to claim 1, wherein the chain (5a, 5b) or belt of a driving means describes a looped circuit by partially winding at least about two guiding wheels (6a, 7a; 6b, 7b) with a horizontal axis by defining an ascending chain or belt strand and a descending chain or belt strand, on this chain (5a, 5b) or belt, externally to the looped circuit being described, is applied, in an articulated manner, at a regular pitch, a bellows-like unfoldable and foldable structure (18a, 18b) comprised of a succession of arms (181a, 182a) articulated to each other and a first end of which is mounted in an articulated way on the chain (5a, 5b) or belt and the other end of which carries the articulated connecting supports (12a, 12b) of said angle brackets (3a, 3b).

3. Noria-like transport device (1) according to any one of the preceding claims, wherein the articulated connecting support (12a, 12b) is defined essentially in the form of an articulating axis (13a, 13b) carrying an angle bracket (3a, 3b).

4. Noria-like transport device (1) according to any one of claims 1 or 2, wherein the articulated connecting support (12a, 12b) includes an articulating axis (13a, 13b) on which is mounted a rack (14a, 14b) of several superimposed, preferably equidistant, angle brackets (3a, 31a, 32a; 3b, 31b, 32b).

5. Noria-like transport device (1) according to any one of the preceding claims, wherein said device (1) includes, at the upper end of each driving means (5a, 5b), means for assisting the transfer of supporting means (3) arriving at the upper end of an ascending column (8) above a descending column (9), said means for assisting the transfer including a cam device, which an articulated connecting support (12a, 12b) is brought to cooperate with in order to subject the latter to a successively increasing and decreasing speed of movement when passing from the upper end of an ascending column (8) to the upper end of a descending column (9).

6. Noria-like transport device (1) according to the preceding claim, wherein the means for assisting the transfer constitute the means for maintaining and guiding the angle brackets (15a) in a horizontal position and include at least two cam tracks (19a, 20a) each cooperating with a distinct roller (21a, 22a) carried by the articulated connecting support (12a) of an angle brackets (3a).

7. Noria-like transport device (1) according to the preceding claim, wherein an articulated connecting support (12a) includes, on either side of the vertical median plane passing through its horizontal articulating axis (13a), a roller (21a, 22a) cooperating with one of the cam tracks (19a, 20a), each roller (21a, 22a) constituting furthermore, in cooperation with a suitable vertical slide (81a, 91a), means for guiding and maintaining the angle brackets (3a) in a horizontal position along the ascending (8) and descending (9) vertical columns.

8. Unit for processing bakery or similar products, said unit being namely of the baking oven or fermenter or freezer or cooling tower type, wherein it comprises at least one noria-like transport device (1) according to any one of the preceding claims.
